# EUROPEAN PATENT SPECIFICATION

(11) **EP 2 531 362 B1**
(45) Date of publication and mention of the grant of the patent: **08.04.2015**
(21) Application number: 10707795.0
(22) Date of filing: 05.02.2010
(51) Int. Cl.: B60C 11/13, B60C 11/113

(54) **AGRICULTURAL TYRE**
LANDWIRTSCHAFTSREIFEN
PNEU AGRICOLE

(43) Date of publication of application: 12.12.2012
(73) Proprietor: Pirelli Tyre S.p.A., 20126 Milano (IT)
(72) Inventor: ZUCATO, Igor, 09111-310 Santo André - SP (BR); GONÇALVES, Eduardo Pinheiro, 09111-000 Santo André - SP (BR)
(74) Representative: Lasca, Sergio
(86) International application number: PCT/BR2010/000022
(87) International publication number: WO 2011/094828

(56) References cited:
- JP-A- 6 032 110
- JP-A- 9 226 305
- US-A- 4 595 042
- US-A1- 2004 123 926

## Description

### FIELD OF THE INVENTION

The present invention relates to pneumatic tyres adapted to be used on agricultural and/or industrial tractors, or on other similar or comparable vehicles intended to operate on crumbly, slippery and/or muddy soil.

### BACKGROUND ART

In order to be suitable for the above mentioned uses, tractor or agricultural tyres are provided with a tread characterized by the presence of lugs of relevant height projecting from the tread surface.

During the use, particularly on crumbly, slippery and/or muddy soil, the lugs of the tread pattern sink more or less completely in the ground to insure traction. It follows that the traction capability of the tyre is affected both by the self-cleaning ability of the tread, which influences the penetration of the lugs in the ground, and by the possibility, for each lug, to maintain as high as possible the level of penetration in the ground, in terms of time and height, during the passage in the contact area between the tyre and the ground.

The US patent no. 4131148 discloses a pneumatic tyre for agricultural and industrial tractors having a tread of the type having a plurality of lugs arranged in succession along the tyre circumference in two contiguous series offset with respect to the equatorial plane of the tyre, the lugs of each series extending obliquely from the tread edges towards the equatorial plane and being longitudinally spaced apart from one another by a distance ranging between 1.5 and 6 times the longitudinal width of the lugs, characterized in that the tyre comprises corners extending at least on the tread surface between two adjacent lugs, the portion of the profile between every two contiguous corners, defined by the tyre section taken with a plane parallel to the lugs, being concave or, at the limit, rectilinear.

The US patent no. 6401774 relates to a pneumatic all-terrain vehicle tyre having puncture prevention pads. In more detail, the tread has a plurality of elongated pads extending radially outwardly from the inner tread, and each elongated pad is oriented in a direction substantially parallel to the centrelines of circumferentially adjacent lugs. Each pad has a base width Z as measured from the inner tread and a radial height X also being measured from the inner tread. Z is at least three times greater than X. The longitudinal sides of the elongated pads have a slope of 30° or less as measured from the inner tread surface, preferably about 20° or less. The radial height is less than 0.2 inches (5 mm).

The US patent no. 6536490 relates to a pneumatic all-terrain vehicle tyre having an inner tread with a textured surface projecting from the inner tread. The textured surface can be arranged in a mosaic pattern. The mosaic pattern has directionally oriented polygonal shapes elongated relative to the direction of flow, i.e. the direction in which soil or mud is discharged through soil discharge channels formed by an inner tread portion and two or more lugs. Each of the polygonal shapes forming the textured surface has a peripheral boundary projecting less than 4 mm. The average length to width ratio of the polygonal shapes forming the mosaic pattern is at least 2 to 1.

The US patent no. 2004/0123926 A1 discloses a pneumatic tyre for agricultural vehicles having a tread of the type having a plurality of lugs arranged in succession along the tyre circumference in two contiguous series offset with respect to the equatorial plane of the tyre, wherein a plurality of elongated pads are interposed between circumferentially adjacent lugs, preventing damage to the tyre's inner tread without impeding the soil shedding characteristics of the tyre's soil discharge channels. The width of the puncture prevention pads may vary to compensate for the greater spacing between circumferentially adjacent lugs at the shoulder region of the tyre.

The US patent no. 4595042 discloses a pneumatic tyre for agricultural vehicles having a tread of the type having a series of lugs arranged circumferentially of the tyre and a series of grooves arranged only one between each next adjacent pair of the lugs, wherein the grooves comprising projections each of which is arranged in its corresponding groove between the lugs and smaller in height than the lug. Each projection is spaced from the lug a predetermined distance circumferentially of the tyre and extends inwardly from its lateral edge and terminates short of the midcircumferential centerline of the tyre and further extends outwardly from the lateral edge thereof and terminates in the side wall of the tyre.

### SUMMARY AND DISCLOSURE OF THE INVENTION

The Applicant has found that the self-cleaning capability of a tyre adapted for agricultural and/or tractor use is greatly improved by creating a discontinuity between circumferentially adjacent tread surface portions located between circumferentially consecutive lugs. The created discontinuity extends between the lugs, without joining to the lugs themselves. Generally, the discontinuity extends in transverse direction, for example in direction substantially parallel to the direction followed by the lugs. Such discontinuity can be created by joining, at the adjacency thereof, tread surface portions located at different radial heights.

In particular, it has been found that at the discontinuity the rigidity of the inner tread surface located between the lugs is slightly reduced, so that the discontinuity works as a hinge. During the rotation of the tyre and the working of the lugs within the terrain, in case mud is entrapped between the lugs, the discontinuity/hinge allows a slight but continuous "up and down" displacement of the whole inner tread portion comprised between the lugs, so that the mud is continuously moved at the interface with the inner tread surface. Such continuous movement hinders a firm attach of the mud itself to the tread surface, so that, eventually, the entrapped mud is discharged through the shoulder portions of the tread. It is noticed that the above used expression "up and down" referred to the movement or displacement of the inner tread surface was used for the sake of ease of explanation, and has to be referred to a substantially radial direction of the tyre: thus, more formally, such "up and down" movement or displacement is an outward/inward oscillation of the inner tread surface along a radial direction.

The discontinuity/hinge creates a synergy with the working of the lugs. The working of the lugs moves the terrain and, at the same time, the circumferential oscillations of the lugs induced by such working are transmitted to the inner tread surface, so as to induce a movement thereof. Here, the discontinuity/hinge determines a "line" which can run up to the whole inner tread portion between the lugs, and at which the movement induced from the lugs is concentrated and amplificated, so that a firm attach of mud is effectively hindered.

In an aspect, the present invention relates to a pneumatic tyre, comprising a carcass structure and a tread disposed in a radially outer position with respect to said carcass structure. The tread comprises an inner tread and a plurality of spaced lugs outwardly projecting from said inner tread.

The spaced lugs extend in transverse direction substantially from a central portion towards shoulder portions of the tread.

A portion of the inner tread comprised between two circumferentially consecutive lugs comprises at least a first and a second surface. The first and the second surfaces are circumferentially adjacent.

Substantially at the adjacency between the first and the second surface, the first and the second surfaces are at least partially disposed at different radial heights, so as to form at least one transversely extending step within the inner tread portion.

For the purposes of the present invention, the expression "radial height" refers to a distance measured in radial direction from the rotation axis of the tyre. The radial height of an inner tread surface in a given point thereof is thus the distance between such point and the rotation axis of the tyre.

A discontinuity extending in transverse direction is thus formed between circumferentially consecutive lugs. The exact dimensions and shape of this discontinuity may depend on the size of the tyre. However, the dimensions and shape are chosen in such a manner as to create a discontinuity in the rigidity of the inner tread portion located within circumferentially consecutive lugs, to create a hinge. In preferred embodiments, in at least a portion of the inner tread surface located between circumferentially consecutive lugs an abrupt change of the radial height of the inner tread surface is created. Such abrupt change may generally occur in a very small circumferential portion, for example in a portion having a dimension, in circumferential direction, of less than about 10 mm, preferably of less than 5 mm.

The ramp surface of the step formed between the adjacent surfaces is preferably almost radial. In practice, the angle formed by the ramp surface of the step formed between the adjacent surfaces, with respect to a direction tangent to the inner tread at the adjacency, is of at least 45°. Preferably, the ramp surface of the formed step has portions forming an angle comprised between about 70° and about 90° with respect to a direction tangent to the inner tread at the adjacency.

A maximum height (measured in radial direction) of the transversely extending step may be of about 10 mm, more preferably of about 5 mm. The height of the step corresponds to the difference of the radial heights of the inner tread surface portions which form the step itself.

It may be preferably provided that a height of the transversely extending step decreases in direction of the tread shoulder portions. This may facilitate the expulsion of the mud by the action of the gravity.

Alternatively or in combination, it may be preferably provided that a height of said transversely extending step decreases in direction of said tread central portion.

The step does not join with the lugs. In preferred embodiments, the step substantially extends parallelly to the extension of the lugs.

It has to be noticed that the extension of the step may be formed by one or more rectilinear and/or curvilinear stretches.

The direction formed by the extension of the step (in its path from the central portion towards the shoulder portion of the tyre tread) with respect to a direction parallel to the equatorial plane of the tyre may preferably range from about 30° to about 90°. In preferred embodiments, the angle formed by the extension direction of the step and a direction parallel to the equatorial plane of the tyre increases from the central portion to the shoulder portion of the tread.

In preferred embodiments, the first and/or the second adjacent surfaces are substantially planar surfaces.

In preferred embodiments, the walls of the lugs comprise at least one substantially planar wall portion. Edges may be formed at the intersection of planar wall portions forming the walls of the lugs.

In preferred embodiments, the head end of the lugs disposed substantially at the central portion of the tread has a regular polygonal contour.

### BRIEF DESCRIPTION OF THE DRAWINGS

Further features and advantages of the tyre of the present invention shall become clearer from the following detailed description of exemplary embodiments thereof, made with reference to the attached drawings given just as non-limiting examples. In such drawings:
- figure 1 shows a perspective view of an embodiment of a tyre according to the present invention;
- figure 2 shows a front view of the embodiment of figure 1;
- figure 3 shows a transverse section of an embodiment of a tyre according to the present invention;
- figure 4 shows an enlarged portion of the front view of figure 2;
- figure 5 shows a lateral view of an inner tread portion of the tyre of figures 1, 2, 4 located between two circumferentially consecutive lugs;
- figure 6 shows a partial section taken along the line A-A of the tyre of figure 3;
- figure 7 shows a partial section taken along the line B-B of the tyre of figure 3.
- figure 8 shows a schematic enlarged view of a step formed between circumferentially adjacent inner tread surface portions.

### DETAILED DESCRIPTION OF EXEMPLARY EMBODIMENTS OF THE INVENTION

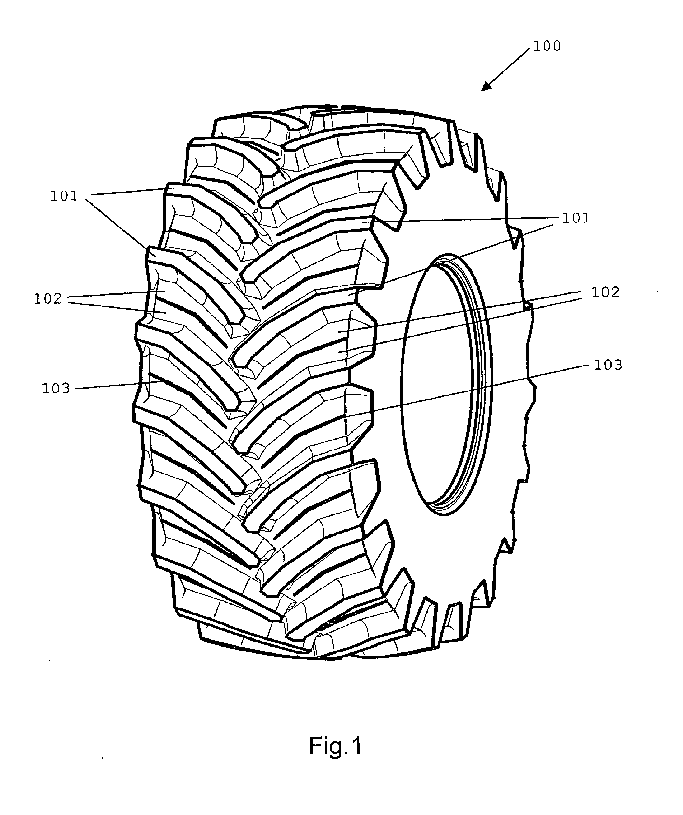

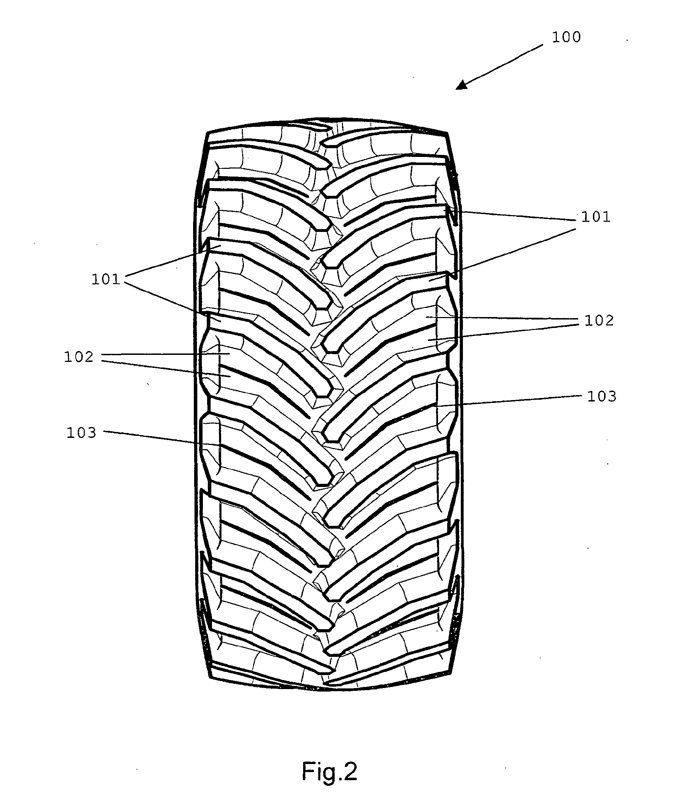

Figures 1 and 2 show two plain views of an exemplary agricultural tyre 100 according to an embodiment of the invention.

The tyre 100 has a tread comprising a plurality of spaced lugs 101. The lugs 101 obliquely extend from the central portion of the tread (at or close to the equatorial plane of the tyre) to the shoulder portions of the tyre. In particular, the lugs are divided in two series which alternate on opposite sides with respect to the equatorial plane of the tyre along the tyre circumference.

Inner tread portions 102 are located between the lugs 101. In practice, the inner tread portions 102 form the surface of the tread from which the spaced lugs 101 project. Typically, in an agricultural tyre the space between two consecutive lugs is quite relevant. The width of the inner tread portions 102, as measured in circumferential direction, may be at least equal to about the width of the lugs 101, and is preferably comprised in a range from 1 to 6-10 times the width of the lugs 101 (taken in the radially outermost portion thereof).

The inner tread portions 102 located between the lugs 101 are divided in two circumferentially consecutive surfaces. For such purpose, discontinuities 103 are formed within the inner tread portions 102. As it will be described with higher detail in the remainder of the description, such discontinuities 103 are formed by providing, within the inner tread portions 102, circumferentially adjacent surface portions located at different radial height (at least at the adjacency between the two surface portions).

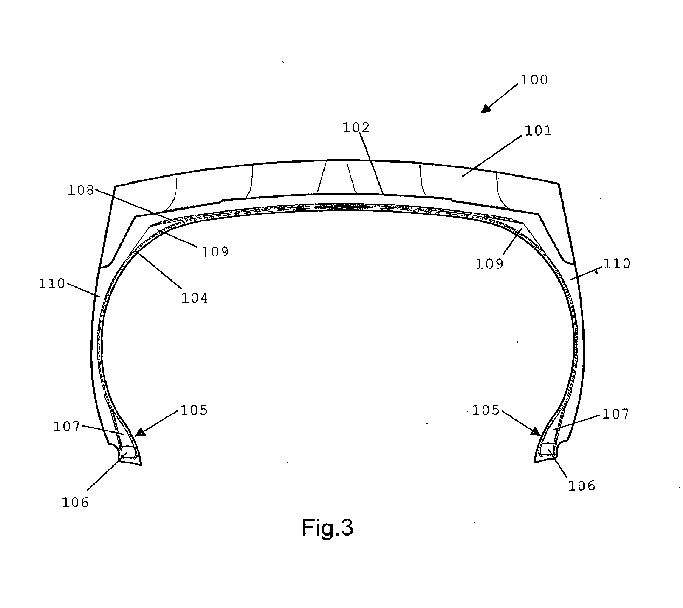

Figure 3 shows a transverse section of the agricultural tyre of figures 1 and 2.

As shown in the sectional view of figure 3, the tire 100 comprises at least a carcass structure 104 comprising at least one carcass ply. Typically, at least two carcass plies are used for most agricultural tyres. Such plies incorporate a plurality of cords.

In particular, the tyre structure shown in figure 3 has a radial carcass, in which the cords of the carcass ply or plies are disposed according to an angle substantially orthogonal to the circumferential direction of the tyre (e.g. between 70° and 110° versus the circumferential direction).

Alternatively, the carcass structure of the tyre could comprise a number of carcass plies (e.g. four carcass plies) having cords inclined with respect to the circumferential direction of the tyre, wherein each ply comprises cords having crossed orientation with respect to the cords of the adjacent ply. Typically, the cords used in the carcass structure of an agricultural tyre are textile cords, such as, for example, PA (polyamide) cords, aramide cords or PET (polyethylene terephthalate) cords.

The carcass structure 104 has opposite lateral edges associated with respective right-hand and left-hand bead structures 105, defined along an inner circumferential edge of the tire 100, with which the tire engages on a rim (not shown) forming part of a vehicle wheel.

In the embodiment shown in figure 3 the bead structures 105 comprise a bead core 106 and a bead filler 107; the ends of the ply or plies of the carcass structure are folded around the bead core 106 and the bead filler 107 so as to form the so-called carcass turnup.

The tread band comprising the spaced lugs 101 and the inner tread portions 102 is applied in a radially external position with respect to the carcass structure 104. Typically, in an agricultural tyre the lugs 101 project from the inner tread surface with a relevant height, for example comprised between about 20 and about 120 mm, depending on the size of the tyre.

Sidewalls 110 are laterally applied on opposite sides with respect to said carcass structure 104.

In the case of tubeless tyres, a rubber layer generally known as a liner, which provides the necessary impermeability to the inflation air of the tyre, is also typically provided in an inner position relative to the carcass structure 104.

Particularly in a radial tyre, a belt structure 108 is applied along the circumference of the carcass structure 104, in a radially outer position thereof.

The belt structure 108 generally comprises a plurality of radially superposed belt layers. Preferably, the belt structure comprises at least four belt layers. Each belt layer incorporates a plurality of reinforcing elements. Such reinforcing elements could be metal (e.g. steel) cords. In an agricultural tyre, textile cords may also be used, such as, for example, PA (polyamide) cords, aramide cords or PET (polyethylene terephthalate) cords.

The reinforcing elements are parallel to each other in each layer and inclined with respect to the equatorial plane of the tyre, of an angle preferably ranging between 10° and 40°. The reinforcing elements of each layer have a crossed orientation with respect to the reinforcing elements of the adjacent layer.

An insert 109 is further located at the edges of the belt structure 108, in the area where the lateral edges of the tread band connect with the sidewalls 110. Usually, the inserts 109 are interposed between the carcass structure 104 and the belt structure 108, to support the edges of the latter.

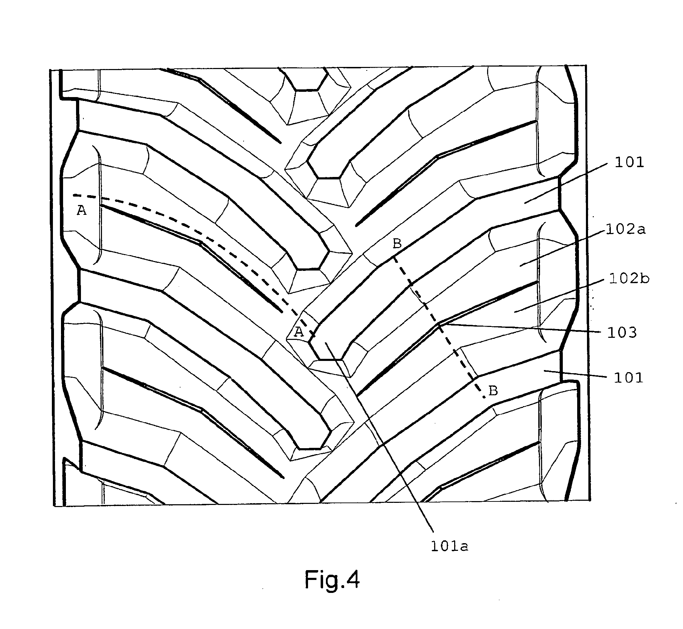

Figure 4 shows an enlarged portion of the front view of the tread band of the tyre 100 shown in figure 2. In the exemplary embodiment shown in figure 4, the spaced lugs 101 are formed by a plurality of portions having straight radially outer profiles disposed at a respective inclination angle with respect to the equatorial plane of the tyre. In radial direction, the walls of the lugs 101 comprise edges, which form at the intersection between two planar wall portions extending, in radial direction, from the respective radially outer straight profile portion.

A polygonal head portion 101a forms the end of each lug 101 located in the central portion of the tread. In the embodiment shown, the polygonal head 101a is located substantially at the equatorial plane of the tyre. In preferred embodiments, the polygonal head portion 101a has the shape of a regular polygon.

In the exemplary embodiment shown in figure 4, the inner tread portions located between two circumferentially consecutive lugs 101 are divided in two circumferentially adjacent surfaces 102a, 102b, separated by a step 103. The step extends transversely on the tread, substantially from the central portion towards the shoulder portions of the tread. The step 103 forms a discontinuity on the tread surface, and is created by disposing the adjacent inner tread surface portions 102a, 102b at different radial heights at least at the adjacency portion thereof.

The direction formed by the extension of the step 103 (in its path from the central portion towards the shoulder portion of the tyre tread) with respect to a direction parallel to the equatorial plane of the tyre may preferably range from about 30° to about 90°. The angle formed by the extension direction of the step and a direction parallel to the equatorial plane of the tyre preferably increases from the central portion to the shoulder portion of the tread.

Preferably, the maximum height (measured in radial direction) of the step 103 (i.e., the difference between the radial heights of the inner tread surface portions 102a, 102b at the step 103) is about 10 mm. More preferably, the maximum height of the step 103 is about 5 mm.

In preferred embodiments, the height of the step 103 decreases in direction of the tread shoulder portions. It may be provided that such height decreases up to substantially zero at the shoulder portion of the tread.

In preferred embodiments, the height of the step 103 decreases in direction of the tread center. It may be provided that such height decreases up to substantially zero at the central portion of the tread.

As shown in figure 4, the step 103 does not join with the edges and/or the walls of the lugs 101. In other words, the step 103 extends in a direction generally parallel to the extension direction of the lugs 101. In any case, it may be provided that portions of the step 103 follow a path which could deviate from the precise extension direction of the lugs 101. However, the step 103 extends so as to create a discontinuity which extends substantially over the whole inner tread portion located between two circumferentially consecutive lugs 101.

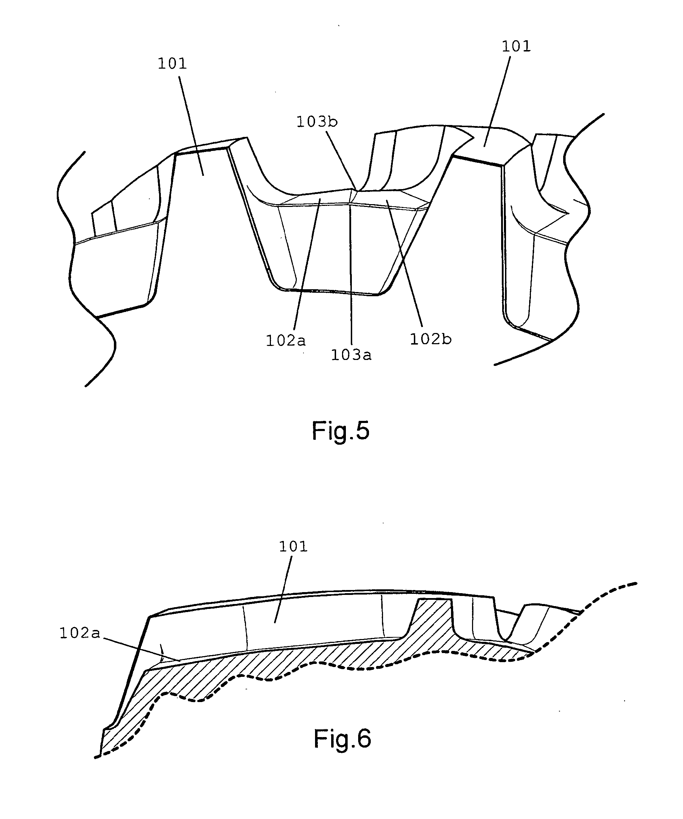

Figure 5 shows a lateral view of a tread portion located between two circumferentially consecutive lugs 101. As it can be seen, in the exemplary embodiment shown in figure 5 two adjacent inner tread planar surface portions 102a, 102b are shown, having different radial heights in the central part of the inner tread portion. A step is thus created at the adjacency portion between the two planar surfaces 102a, 102b. In particular, a step portion 103b located in an axially central part of the inner tread portion has maximum height. On the other hand, a step portion 103a having height tending substantially to zero is formed at the shoulder portion of the tread. In preferred embodiments, the height of the step decreases from its axially central portion 103b to the shoulder portion 103a.

Figure 6 shows a section of an inner tread portion between two circumferentially consecutive lugs 101 of the tread, taken along line A-A shown in figure 4, i.e., in proximity of the step 103. In the preferred embodiment shown, the transverse profile of the inner tread surface portion 102a comprises substantially straight portions (i.e., the inner tread surface portion 102a is formed by substantially planar portions). The same can be applied for the inner tread surface portion 102b.

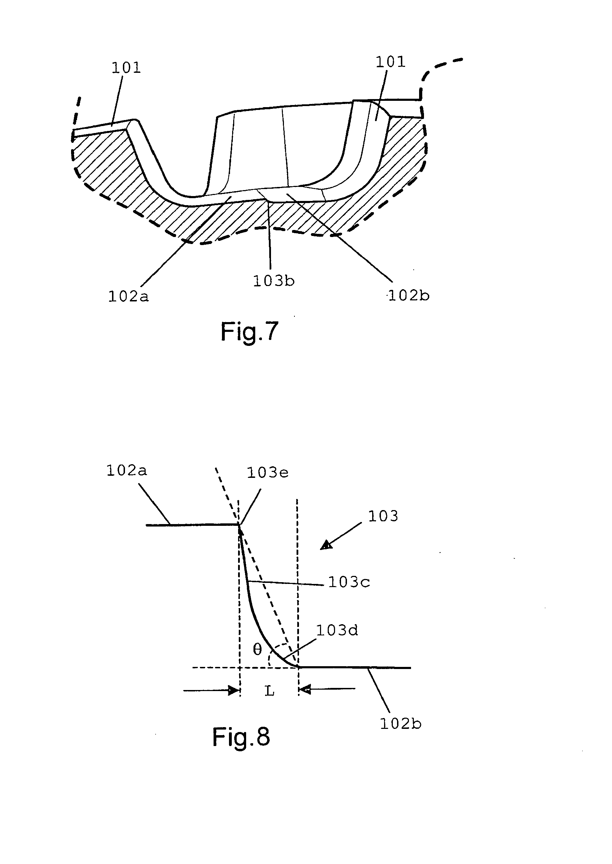

Figure 7 shows a section of an inner tread portion between two circumferentially consecutive lugs 101 of the tread, taken along line B-B shown in figure 4, i.e., from one lug to the consecutive lug. In particular, the section is taken at the portion in which the step 103 has maximum height. As it can be seen by figure 7, substantially planar inner tread surface portions 102a, 102b join, through a curved profile, to the walls of the lugs 101. At the adjacency portion between them, the two inner tread surface portions 102a, 120b have different radial heights, so as to form the above mentioned step: in particular, figure 7 shows the step portion 103b located at an axially central part of the inner tread portion between the lugs 101, having maximum height.

Figure 8 shows a schematic enlarged sectional view of the step 103 formed between circumferentially consecutive inner tread surface portions 102a, 102b having different radial heights.

The step 103 introduces a discontinuity extending in transverse direction in the inner tread between the lugs. The exact dimensions of this discontinuity may depend on the size of the tyre. However, as it is shown in figure 8, the step 103 creates an abrupt change of the radial height in at least a portion of the inner tread surface located between circumferentially consecutive lugs. Such abrupt change occurs in a very small circumferential portion L. The portion L may have, for example, a dimension, measured in circumferential direction, of less than about 10 mm (i.e., from about 0 mm to about 10 mm), preferably of less than 5 mm.

The ramp surface 103c of the step 103 is also almost radial. In practice, the angle q formed by a line joining the extremes of the step 103 (i.e. the end portions of the inner tread surface portions 102a, 102b) with respect to a direction tangent to the inner tread at the adjacency between the surface portions 102a, 102b, is of at least 45°. Due to the small dimensions of the step 103, such line may well represent the ramp surface 103c itself. In any case, it is preferably provided that the ramp surface 103c has at least a portion forming an angle comprised between about 70° and 90° with respect to a direction tangent to the inner tread at the adjacency between the surface portions 102a, 102b.

The ramp surface 103c and the inner tread surface portions 102a, 102b can be joined through curved surface portions and/or through edges. In the exemplary embodiment shown in figure 8, a curved surface portion 103d joins the inner tread surface portion 102b with the ramp surface 103c of the step 103, while an edge is substantially formed at the joining of the ramp surface 103c and the inner tread surface portion 102a. The curved surface portion 103 d can be accomplished by a radiused surface having radius comprised between about 0 mm and 10 mm.

The Applicant has found that the self-cleaning capability of a tyre adapted for agricultural and/or tractor use is greatly improved by creating the above described discontinuity, or step, between circumferentially adjacent tread surface portions located between circumferentially consecutive lugs.

In particular, it has been found that at the discontinuity the rigidity of the inner tread surface located between the lugs is slightly reduced, so that the discontinuity works as a hinge. During the rotation of the tyre, in case mud is entrapped between the lugs, the discontinuity/hinge allows a slight but continuous "up and down", oscillating radial displacement of the whole inner tread portion comprised between the lugs, so that the mud is continuously moved at the interface with the inner tread surface. Such continuous movement hinders a firm attach of the mud itself to the tread surface, so that, eventually, the entrapped mud is discharged through the shoulder portions of the tread.

The discontinuity/hinge creates a synergy with the working of the lugs. The working of the lugs moves the terrain and, at the same time, the circumferential oscillations of the lugs induced by such working are transmitted to the inner tread surface, so as to induce a movement thereof. Here, the discontinuity/hinge determines a "line" which can run up to the whole inner tread portion between the lugs, and at which the movement induced from the lugs is concentrated and amplificated, so that a firm attach of mud is effectively hindered.

The previous description presents and discusses in detail some embodiments of the present invention; nevertheless, several changes to the described embodiments, as well as different invention embodiments are possible, without departing from the scope defined by the appended claims.

For example, more than one step can be created within an inner tread portion located between circumferentially consecutive lugs.

As another example, one or more steps running substantially in circumferential and/or oblique direction from one lug to a circumferentially consecutive lug may also be provided in combination with the described transversely extending step.

## Claims

1. A pneumatic tyre (100) comprising a carcass structure (104) and a tread disposed in a radially outer position with respect to said carcass structure (104), wherein said tread comprises an inner tread (102) and a plurality of spaced lugs (101) outwardly projecting from said inner tread (102), wherein said spaced lugs (101) extend in transverse direction from a central portion towards shoulder portions of the tread, wherein a portion of said inner tread (102) comprised between two circumferentially consecutive lugs (101) comprises at least a first and a second circumferentially adjacent surfaces (102a, 102b), wherein substantially at the adjacency thereof said first and second surfaces (102a, 102b) are at least partially disposed at different radial heights, so as to form at least one transversely extending step (103) within said inner tread portion (102), wherein a dimension and/or a shape of said step (103) is chosen so as to create a discontinuity in a rigidity of said portion of inner tread (102) comprised between two circumferentially consecutive lugs (101), to create a hinge.

2. A pneumatic tyre (100) according to any one of the previous claims, wherein a maximum height of said transversely extending step (103) is of 10 mm.

3. A pneumatic tyre (100) according to claim 2, wherein said maximum height of said transversely extending step (103) is of 5 mm.

4. A pneumatic tyre (100) according to any one of the previous claims, wherein said transversely extending step (103) extends in circumferential direction of less than 10 mm.

5. A pneumatic tye (100) according to claim 4, wherein said transversely extending step (103) extends in circumferential direction of less than 5 mm.

6. A pneumatic tyre (100) according to any one of the previous claims, wherein a height of said transversely extending step (103) decreases in direction of said shoulder portions of said tread.

7. A pneumatic tyre (100) according to any one of the previous claims, wherein a height of said transversely extending step (103) decreases in direction of said central portion of said tread.

8. A pneumatic tyre (100) according to any one of the previous claims, wherein a ramp surface (103c) of said step (103) forms an angle (θ) of at least 45° with respect to a direction tangent to said inner tread (102) at said adjacency.

9. A pneumatic tyre (100) according to claim 8, wherein at least a portion of said ramp surface (103c) forms an angle (θ) comprised between 70° and 90° with respect to said direction tangent to said inner tread (102) at said adjacency.

10. A pneumatic tyre (100) according to any one of the previous claims, wherein an extension of said transversely extending step (103) is substantially parallel to an extension of said lugs (101).

11. A pneumatic tyre (100) according to any one of the previous claims, wherein at least one of said first and said second surface (102a, 102b) is a substantially planar surface.

12. A pneumatic tyre (100) according to any one of the previous claims, wherein said lugs (101) comprise at least one substantially planar wall portion.

13. A pneumatic tyre (100) according to claim 12, wherein said lugs (101) comprise at least two substantially planar wall portions, forming an edge at an intersection thereof.

14. A pneumatic tyre (100) according to any one of the previous claims, wherein a head end (101a) of said lugs (101) disposed substantially at the equatorial plane of the tyre has a regular polygonal contour.

## Patentansprüche

1. Luftreifen (100) mit einer Karkassenstruktur (104) und einem Profil, das in einer radial äußeren Position in Bezug auf die Karkassenstruktur (104) angeordnet ist, wobei das Profil ein Innenprofil (102) und eine Vielzahl von mit Zwischenraum angeordneten Stollen (101), die von dem Innenprofil (102) nach außen ragen, umfasst, wobei sich die mit Zwischenraum angeordneten Stollen (101) in Querrichtung von einem mittigen Abschnitt in Richtung von Schulterabschnitten des Profils erstrecken, wobei ein Abschnitt des Innenprofils (102), der zwischen zwei in Umfangsrichtung aufeinanderfolgenden Stollen (101) eingeschlossen ist, mindestens eine erste und eine zweite in Umfangsrichtung nebeneinanderliegende Oberfläche aufweist, wobei im Wesentlichen im Grenzbereich davon die erste und die zweite Oberfläche (102a, 102b) mindestens teilweise auf verschiedenen radialen Höhen angeordnet sind, um mindestens eine sich quer erstreckende Stufe (103) innerhalb des Innenprofilabschnitts (102) zu bilden, wobei ein Maß und/oder eine Gestalt der Stufe (103) derart gewählt ist, dass eine Diskontinuität in einer Steifigkeit des Abschnitts des Innenprofils, der zwischen zwei in Umfangsrichtung aufeinanderfolgenden Stollen (101) eingeschlossen ist, geschaffen wird, um ein Drehgelenk zu schaffen.

2. Luftreifen (100) nach einem der vorhergehenden Ansprüche, wobei die maximale Höhe der sich quer erstreckenden Stufe (103) 10 mm beträgt.

3. Luftreifen (100) nach Anspruch 2, wobei die maximale Höhe der sich quer erstreckenden Stufe (103) 5 mm beträgt.

4. Luftreifen (100) nach einem der vorhergehenden Ansprüche, wobei die sich quer erstreckende Stufe (103) sich in Umfangsrichtung über weniger als 10 mm erstreckt.

5. Luftreifen (100) nach Anspruch 4, wobei die sich quer erstreckende Stufe (103) sich in Umfangsrichtung über weniger als 5 mm erstreckt.

6. Luftreifen (100) nach einem der vorhergehenden Ansprüche, wobei eine Höhe der sich quer erstreckenden Stufe (103) in Richtung der Schulterabschnitte des Profils abnimmt.

7. Luftreifen (100) nach einem der vorhergehenden Ansprüche, wobei eine Höhe der sich quer erstreckenden Stufe (103) in Richtung des mittigen Abschnitts des Profils abnimmt.

8. Luftreifen (100) nach einem der vorhergehenden Ansprüche, wobei in dem Grenzbereich eine Rampenfläche (103c) der Stufe (103) einen Winkel (θ) von mindestens 45° in Bezug auf eine Richtungstangente an das Innenprofil (102) bildet.

9. Luftreifen (100) nach Anspruch 8, wobei in dem Grenzbereich mindestens ein Abschnitt der Rampenfläche (103c) einen Winkel (θ) im Bereich zwischen 70° und 90° in Bezug auf die Richtungstangente an das Innenprofil (102) bildet.

10. Luftreifen (100) nach einem der vorhergehenden Ansprüche, wobei eine Verlängerung der sich quer erstreckenden Stufe (103) im Wesentlichen parallel zu einer Verlängerung der Stollen (101) ist.

11. Luftreifen (100) nach einem der vorhergehenden Ansprüche, wobei mindestens eine der ersten und der zweiten Oberfläche (102a, 102b) eine im Wesentlichen plane Oberfläche ist.

12. Luftreifen (100) nach einem der vorhergehenden Ansprüche, wobei die Stollen (101) mindestens einen im Wesentlichen planen Wandabschnitt aufweisen.

13. Luftreifen (100) nach Anspruch 12, wobei die Stollen (101) mindestens zwei im Wesentlichen ebene Wandabschnitte aufweisen, die an ihrer Schnittlinie eine Kante bilden.

14. Luftreifen (100) nach einem der vorhergehenden Ansprüche, wobei ein Kopfstück (101a) der Stollen (101), das im Wesentlichen in der Äquatorialebene des Reifens angeordnet ist, einen Umriss eines gleichseitigen Vielecks aufweist.

## Revendications

1. Bandage pneumatique (100) comprenant une structure de carcasse (104) et une bande de roulement disposée dans une position radialement externe par rapport à ladite structure de carcasse (104), où ladite bande de roulement comprend une bande de roulement interne (102) et une pluralité de barrettes espacées (101) faisant saillie vers l'extérieur à partir de ladite bande de roulement interne (102), où lesdites barrettes espacées (101) s'étendent dans une direction transversale à partir d'une partie centrale vers des parties d'épaulement de la bande de roulement, où une partie de ladite bande de roulement interne (102) comprise entre deux barrettes circonférentiellement consécutives (101) comprend au moins des première et deuxième surfaces adjacentes de manière circonférentielle (102a, 102b), où essentiellement au niveau de leur contiguïté lesdites première et deuxième surfaces (102a, 102b) sont au moins partiellement disposées à des hauteurs radiales différentes, de manière à former au moins un palier s'étendant transversalement (103) à l'intérieur de ladite partie de bande de roulement interne (102), où une dimension et/ou une forme dudit palier (103) est choisie de manière à créer une discontinuité dans une rigidité de ladite partie de bande de roulement interne (102) comprise entre deux barrettes circonférentiellement consécutives (101), pour créer une charnière.

2. Bandage pneumatique (100) selon l'une quelconque des revendications précédentes, dans lequel une hauteur maximale dudit palier s'étendant transversalement (103) est de 10 mm.

3. Bandage pneumatique (100) selon la revendication 2, dans lequel ladite hauteur maximale dudit palier s'étendant transversalement (103) est de 5 mm.

4. Bandage pneumatique (100) selon l'une quelconque des revendications précédentes, dans lequel ledit palier s'étendant transversalement (103) s'étend dans une direction circonférentielle de moins de 10 mm.

5. Bandage pneumatique (100) selon la revendication 4, dans lequel ledit palier s'étendant transversalement (103) s'étend dans une direction circonférentielle de moins de 5 mm.

6. Bandage pneumatique (100) selon l'une quelconque des revendications précédentes, dans lequel une hauteur dudit palier s'étendant transversalement (103) diminue dans la direction desdites parties d'épaulement de ladite bande de roulement.

7. Bandage pneumatique (100) selon l'une quelconque des revendications précédentes, dans lequel une hauteur dudit palier s'étendant transversalement (103) diminue dans la direction de ladite partie centrale de ladite bande de roulement.

8. Bandage pneumatique (100) selon l'une quelconque des revendications précédentes, dans lequel une surface de rampe (103c) dudit palier (103) forme un angle (θ) d'au moins 45° par rapport à une direction tangente à ladite bande de roulement interne (102) au niveau de ladite contiguïté.

9. Bandage pneumatique (100) selon la revendication 8, dans lequel au moins une partie de ladite surface de rampe (103c) forme un angle (θ) compris entre 70° et 90° par rapport à ladite direction tangente à ladite bande de roulement interne (102) au niveau de ladite contiguïté.

10. Bandage pneumatique (100) selon l'une quelconque des revendications précédentes, dans lequel une extension dudit palier s'étendant transversalement (103) est essentiellement parallèle à une extension desdites barrettes (101).

11. Bandage pneumatique (100) selon l'une quelconque des revendications précédentes, dans lequel au moins une surface parmi lesdites première et deuxième surfaces (102a, 102b) est une surface essentiellement planaire.

12. Bandage pneumatique (100) selon l'une quelconque des revendications précédentes, dans lequel lesdites barrettes (101) comprennent au moins une partie de paroi essentiellement planaire.

13. Bandage pneumatique (100) selon la revendication 12, dans lequel lesdites barrettes (101) comprennent au moins deux parties de paroi essentiellement planaires, formant un bord au niveau d'une intersection de celles-ci.

14. Bandage pneumatique (100) selon l'une quelconque des revendications précédentes, dans lequel une extrémité de tête (101a) desdites barrettes (101) disposées essentiellement au niveau du plan équatorial du pneu a un contour polygonal régulier.
